Europäisches Patentamt

European Patent Office

Office européen des brevets

(19)

(11) Veröffentlichungsnummer: **0 121 225**
**A2**

## (12) EUROPÄISCHE PATENTANMELDUNG

(21) Anmeldenummer: 84103395.4

(22) Anmeldetag: 27.03.84

(51) Int. Cl.³: **G 06 F 9/26**

(30) Priorität: 29.03.83 DE 3311475

(43) Veröffentlichungstag der Anmeldung:
10.10.84 Patentblatt 84/41

(84) Benannte Vertragsstaaten:
AT BE CH DE FR GB IT LI NL SE

(71) Anmelder: **Siemens Aktiengesellschaft**
**Berlin und München Wittelsbacherplatz 2**
**D-8000 München 2(DE)**

(72) Erfinder: **Schulte, Franz, Dr.**
**Frühlingstrasse 39a**
**D-8011 Baldham(DE)**

(54) Mikroprogramm-Steuereinrichtung.

(57) Elementaroperationen in mikroprogrammierten Steuerungen werden durch EO-Steuersignale ausgelöst, die durch den Operationscode der Mikrobefehle eines Mikroprogramms bestimmt sind. Beim Ablauf von Mikroprogrammen zeigt es sich, daß vielfach Unterprogramme verwendbar sind, weil sich einzelne Abschnitte mehrfach exakt wiederholen.

Für den Fall, daß sich in vergleichbaren Abschnitten zwar der Verlauf der meisten EO-Steuersignale wiederholt, aber einige EO-Steuersignale voneinander abweichen, wird zur individuellen Erzeugung einzelner EO-Steuersignale während solcher, durch ein Unterprogramm ersetzter Abschnitte die Weitergabe von aus dem Mikroprogrammspeicher gelesenen, aber nicht gültigen EO-Steuersignalen verhindert. Die jeweils abweichenden EO-Steuersignale sind durch die letzte Mikroprogrammadresse vor Beginn des Unterprogramms festgelegt.

FIG 1

EP 0 121 225 A2

SIEMENS AKTIENGESELLSCHAFT          Unser Zeichen
Berlin und München                  83 P 1 2 1 5 E

Mikroprogramm-Steuereinrichtung

Die Erfindung bezieht sich auf eine Mikroprogramm-Steuereinrichtung nach dem Oberbegriff des Patentanspruchs 1.

Elementaroperationen in mikroprogrammierten Steuerungen, beispielsweise in Datenverarbeitungsanlagen, werden durch Steuersignale ausgelöst, die durch den Operationscode der Mikrobefehle (Mikrocode) bestimmt sind und nachfolgend als EO-Steuersignale bezeichnet werden. Bei einer bekannten Mikroprogramm-Steuereinrichtung werden die EO-Steuersignale, gegebenenfalls zusammen mit Folgebefehlsadressen, insbesondere Sprungadressen, aus einem Steuerspeicher gelesen, der durch einen sogenannten Mikroprogrammsequenzer adressiert wird (vgl. Druckschrift "The AM 2900 Family DATA BOOK" Advanced Mikro-Devices, 1979, Seite 44 bis 49). Die aus dem Steuerspeicher gelesenen Daten werden in ein Steuerregister übernommen, an dessen Ausgängen sie dann zur Steuerung der einzelnen Elementaroperationen zur Verfügung stehen.

Beim Ablauf von Mikroprogrammen kann es vorkommen, daß sich der zeitliche Verlauf der EO-Steuersignale innerhalb eines gewissen Abschnitts in einem weiteren Abschnitt oder in weiteren Abschnitten exakt wiederholt. Während dieser Abschnitte können die entsprechenden Teile des ursprünglichen Mikroprogramms, im folgenden als Hauptprogramm bezeichnet, durch ein Unterprogramm ersetzt werden. Das ist vor allem im Hinblick auf die Begrenzung des Adressraumes des Steuerspeichers vorteilhaft.

She 1 Pe / 17.03.83

Tritt dagegen der Fall ein, daß sich in vergleichbaren Abschnitten des Programmablaufs zwar der Verlauf vieler EO-Steuersignale wiederholt, aber einige wenige EO-Steuersignale in den einzelnen Abschnitten voneinander abweichen, dann ist der an sich wünschenswerte Einsatz von Unterprogrammen während solcher Abschnitte ohne besondere Vorkehrungen nicht möglich.

Der Erfindung liegt die Aufgabe zugrunde, eine Mikroprogramm-steuereinrichtung so auszubilden, daß Unterprogramme auch dann eingesetzt werden können, wenn für wenige EO-Steuersignale während der Unterprogrammabschnitte abweichende Signalverläufe erforderlich sind. Gemäß der Erfindung weist eine solche Mikroprogramm-Steuereinrichtung die Merkmale im kennzeichnenden Teil des Patentanspruchs 1 auf.

Im folgenden wird die Erfindung anhand eines Ausführungsbeispiels unter Bezugnahme auf die Zeichnung näher beschrieben. Es zeigt

Fig. 1 das allgemeine Schema einer Mikroprogramm-Steuereinrichtung,

Fig.2 den zeitlichen Verlauf einiger repräsentativer EO-Steuersignale,

Fig.3 ein Ausführungsbeispiel der erfindungsgemäßen Mikroprogramm-Steuereinrichtung,

Fig.4 Signalverläufe in Verbindung mit der Einrichtung nach Figur 3.

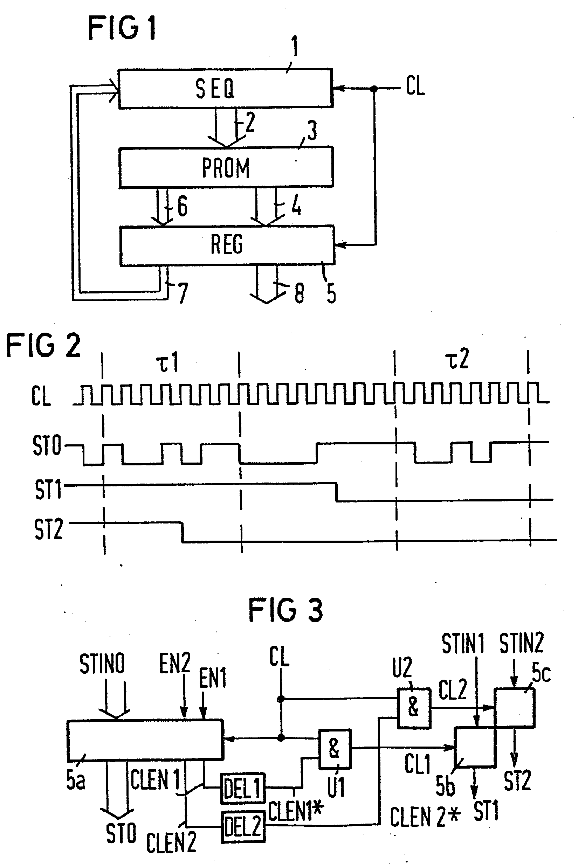

Die Mikroprogramm-Steuereinrichtung nach Figur 1 enthält einen Mikroprogrammsequenzer 1, der entsprechend dem jeweiligen Programmablauf über ein Bündel von Adressleitungen 2 nacheinander Adressen für einen Steuerspeicher 3 liefert. Der Mikroprogrammsequenzer 1 kann dabei sowohl ein Hauptprogramm als auch Unterprogramme aufrufen. Einzelheiten können der bereits genannten Druckschrift "The
AM 2900 Family DATA BOOK" entnommen werden.


Der vorzugsweise als programmierbarer Festwertspeicher
ausgebildete Steuerspeicher 3 enthält vor allem die EO-
Steuersignale, daneben auch Sprungadressen zur Bezeichnung von Unterprogramm-Sprungbefehlen. Die EO-Steuersignale
gelangen über ein Leitungsbündel 4 zu den Eingängen eines
Steuerregisters 5, in das sie beim Eintreffen des nächstfolgenden Impulses eines Steuertaktes CL übernommen werden.
In entsprechender Weise werden die Sprungadressen über
weitere Adressleitungen 6 in das Steuerregister 5 eingegeben. Sie werden von den Ausgängen des Steuerregisters
5 über ein Leitungsbündel 7 zum Sequenzer 1 zurückgeführt.
Die EO-Steuersignale werden über Leitungen 8 an die Stellen einer Steuerung, z.B. einer Speichersteuerung oder
eines Prozessors weitergeleitet, an denen sie wirksam werden sollen.


Die Figur 2 zeigt den für die Informationseingabe in das
Steuerregister 5 wirksamen Takt CL und den zeitlichen
Verlauf einiger an den Ausgängen des Steuerregisters 5
verfügbarer EO-Steuersignale. Dabei sind zwei Abschnitte
$\tau 1$ und $\tau 2$ besonders hervorgehoben. Da für die Ausführung jeder Elementaroperation eine Taktperiode zur Verfügung steht, umfaßt ein Zeitabschnitt $\tau 1$, $\tau 2$
im Mikroprogrammablauf 7 Elementaroperationen.


Das Signal STO nach Figur 2 ist repräsentativ für eine
Mehrzahl von EO-Steuersignalen, die an sich einen ganz
unterschiedlichen Verlauf nehmen können. Wesentlich für
diese Gruppe von EO-Steuersignalen ist jedoch, daß sich
die im ersten Zeitabschnitt $\tau 1$ vorgegebenen Signalverläufe

im zweiten Zeitabschnitt $\tau 2$ (evtl. in weiteren Zeitabschnitten) exakt wiederholen. Diese Voraussetzung möge
in den Zeitbereichen vor, zwischen und nach den Zeitabschnitten $\tau 1$ und $\tau 2$ nicht oder allenfalls nur für einzelne EO-Steuersignale aus der bisher betrachteten,
durch das Signal STO repräsentierten Gruppe gelten.

Während der Zeitabschnitte $\tau 1$ und $\tau 2$ könnte also insoweit ein gemeinsames Unterprogramm eingesetzt werden.
Tatsächlich verbietet sich eine solche Maßnahme zunächst
im Hinblick auf die weiteren EO-Steuersignale ST1 und ST2,
die ersichtlich beide während der Zeitabschnitte $\tau 1$ und
$\tau 2$ verschieden verlaufen bzw. unterschiedliche Binärwerte annehmen und damit der vorher angegebenen Bedingung
nicht gehorchen.

Abhilfe kann jedoch mit Hilfe einer in Figur 3 teilweise
dargestellten Mikroprogramm-Steuereinrichtung gemäß der
Erfindung geschaffen werden. Das Steuerregister 5 nach
Figur 1 ist nunmehr in drei Teile 5a bis 5c aufgeteilt.
Der erste Teil 5a des Steuerregisters empfängt aus dem
in Figur 3 nicht gezeigten Steuerspeicher eine Gruppe
STINO von Steuersignalen, die durch den Steuertakt CL in
das Steuerregister eingegeben werden. Die entsprechenden
Ausgangssignale bilden dann die schon erwähnte Gruppe
STO von EO-Steuersignalen. An zwei weiteren Eingängen des
Teils 5a des Steuerregisters liegen auch noch die gleichfalls
aus dem Steuerspeicher stammenden Signale EN1 und EN2 an.
Die nach der Eingabe in das Steuerregister 5a an dessen
Ausgängen verfügbaren Signalen CLEN1 und CLEN2 werden
nach ihrer Verzögerung um etwa eine halbe Taktperiode mit
Hilfe der Verzögerungsglieder DEL1 und DEL2 als Signale
$CLEN1^+$ und $CLEN2^+$ den ersten Eingängen von UND-Gliedern
U1 und U2 zugeführt. An den zweiten Eingängen dieser UND-Glieder U1 und U2 liegt der Steuertakt CL an. Die Ausgänge der UND-Glieder U1, U2 sind mit den Steuereingängen der Teile 5b und 5c des Steuerregisters verbunden. Die für die Informationseingabe in die Steuerregisterteile 5b und 5c notwendigen Takte CL1 und CL2 werden also abhängig von den Binärwerten der Signale $CLEN1^+$ und $CLEN2^+$ wirksam oder nicht. Dementsprechend werden die aus dem Steuerspeicher gelesenen Signale STIN1 und STIN2 nur in das Steuerregister übernommen für $CLEN1^+ = CLEN2^+ = 1$. Das geschieht mit einer gewissen Einschränkung, auf die noch näher eingegangen wird, in allen Hauptprogrammabschnitten, während in den Unterprogrammabschnitten die Eingabe der Signale STIN1 und STIN2 in die Steuerregisterteile 5b und 5c mindestens zeitweilig verhindert wird.

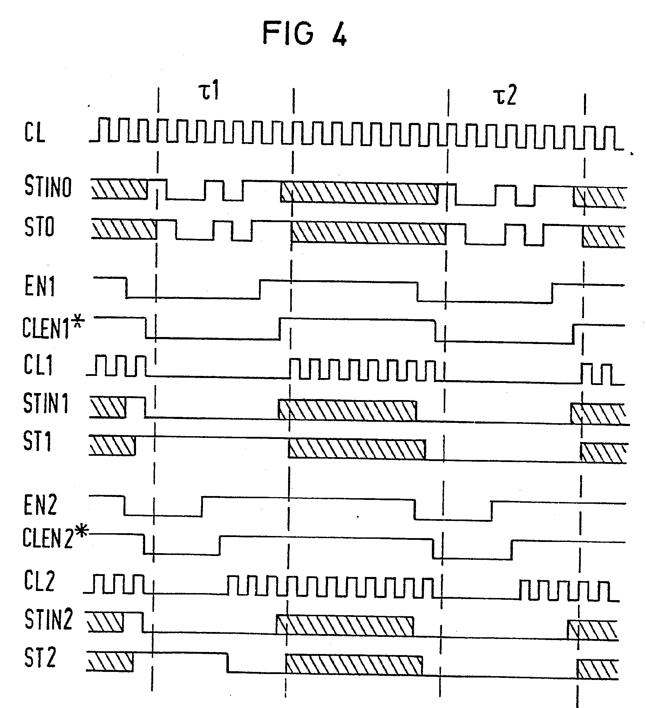

Einzelheiten des zeitlichen Ablaufs der in Verbindung mit der Erfindung wichtigen Signale sind aus Figur 4 erkennbar. Die EO-Steuersignale ST0, ST1 und ST2 entsprechen in ihrem Verlauf den gleichnamigen Signalen in Figur 2. Die schraffierten Abschnitte in der Darstellung von Figur 4 sind allein durch die Erfordernisse des Hauptprogramms bestimmt und beeinflussen die Möglichkeit, ein Unterprogramm einzusetzen, nicht.

Im übrigen wird zum besseren Verständnis der Figur 4 nochmals darauf hingewiesen, daß sich die Markierung der Zeitabschnitte $\tau 1$ und $\tau 2$, in denen das Unterprogramm abläuft, analog zu der Darstellung in Figur 2 auf diejenigen Zeitpunkte bezieht, an denen die jeweils ersten durch das Unterprogramm bzw. durch den nachfolgenden Hauptprogrammabschnitt festgelegten EO-Steuersignale an den Ausgängen des Steuerregisters verfügbar sind. Diese Zeitpunkte fallen (annähernd) mit den ansteigenden Impulsflanken des Steuertaktes CL zusammen. Um eine korrekte Eingabe in das Steuerregister 5 zu gewährleisten, müssen die Signale STIN0 bis STIN2 an dessen Dateneingängen bereits etwas früher vorliegen. In der Darstellung nach Figur 4 wurde dafür ein Vorlauf von einer halben Taktperiode gewählt.

Der Vorlauf der aus dem Steuerspeicher gelesenen Signale EN1 und EN2, aus denen schließlich die Taktsteuersignale $CLEN1^+$ und $CLEN2^+$ abgeleitet werden, beträgt dagegen etwa 1 1/2 Taktperioden, da diese zunächst im Steuerregister zwischengespeichert und anschließend mit Hilfe der Verzögerungsglieder DEL1 und DEL2 verzögert werden. Daraus ergibt sich, daß die die Sperrung der Takte CL1 und CL2 auslösenden Bits der Signale EN1 und EN2 bereits zusammen mit den Bits, die die letzte Elementaroperation des dem Unterprogrammabschnitt vorausgehenden Hauptprogrammabschnitts bestimmen, im Steuerspeicher programmiert sind, d.h. unter der letzten Adresse des Hauptprogrammabschnitts ausgelesen werden.

Gemeinsam mit den Bits der letzten Elementaroperation eines Hauptprogrammabschnitts sind auch die Bits im Steuerspeicher programmiert, die den Verlauf der Signale ST1 und ST2 während der Unterprogrammabschnitte τ1 und τ2 ganz oder teilweise festlegen. So haben beispielsweise entsprechend dem der Figur 4 zugrundegelegten Verlauf der EO-Steuersignale ST1 und ST2 die betreffenden Bits der Signale STIN1 und STIN2 vor dem ersten Unterprogrammabschnitt τ1 beide den Binärwert 1 und vor dem zweiten Unterprogrammabschnitt beide den Binärwert 0.

Es ist noch zu erwähnen, daß sich der Verlauf des Signals STIN1 zwar in den beiden Unterprogrammabschnitten τ1 und τ2 voraussetzungsgemäß wiederholt, sonst aber beliebig sein kann, weil dieses Signal während der ganzen
Unterprogrammabschnitte nicht in das Steuerregister übernommen wird. Ähnliches gilt für das Signal STIN2, jedoch
mit der Einschränkung, daß es spätestens ab der fünften
EO-Adresse im Unterprogramm den Binärwert Null annehmen
muß.


4 Figuren
2 Patentansprüche

Patentansprüche

1. Mikroprogramm-Steuereinrichtung zur Steuerung von Elementaroperationen, mit einem Mikroprogramm-Sequenzer, mit einem durch den Mikroprogramm-Sequenzer adressierten Steuerspeicher zur Ausgabe von EO-Steuersignalen und mit einem Steuerregister zur durch einen Steuertakt gesteuerten Übernahme der aus dem Steuerspeicher ausgegebenen EO-Steuersignale, d a d u r c h   g e k e n n z e i c h - n e t, daß

a) zur individuellen Erzeugung einzelner EO-Steuersignale (ST1, ST2), die in verschiedenen, durch ein Unterprogramm ersetzten Abschnitten eines Mikroprogramms notwendig einen abweichenden Verlauf aufweisen, den Takteingängen für die diese EO-Signale (ST1, ST2) betreffenden Registerstellen des Steuerregisters (5) Sperrglieder (U1, U2) vorgeschaltet sind und

b) daß die Durchschaltung bzw. Sperrung der den genannten Takteingängen zugeführten Impulse (CL1, CL2) des Steuertaktes (CL) durch Taktbefähigungssignale (CLEN1$^+$, CLEN2$^+$) steuerbar ist, die von aus dem Steuerspeicher (3) ausgegebenen Signalen (EN1, EN2) abgeleitet sind.

2. Mikroprogramm-Steuereinrichtung nach Anspruch 1, d a d u r c h   g e k e n n z e i c h n e t, daß die aus dem Steuerspeicher (3) ausgegebenen Signale (EN1, EN2) zur Erzeugung der Taktbefähigungssignale (CLEN1$^+$, CLEN2$^+$) in das Steuerregister (5, 5a) eingegeben und mit Hilfe von den betreffenden Ausgängen des Steuerregisters (5, 5a) nachgeschalteten Verzögerungsgliedern (DEL1, DEL2) um annähernd eine halbe Taktperiode des Steuertaktes (CL) verzögert werden.

FIG 1

FIG 2

FIG 3

2/2

FIG 4